# EUROPEAN PATENT APPLICATION

(11) **EP 1 626 188 A2**
(43) Date of publication of application: **15.02.2006**
(21) Application number: 05254868.2
(22) Date of filing: 04.08.2005
(51) Int. Cl.: F16C 27/04, F01D 25/16, F16F 15/023

(54) **Bearing assembly for a gas turbine engine with resilient support**

(30) Priority: 11.08.2004 GB 0417847
(71) Applicant: ROLLS-ROYCE PLC, London, SW1E 6AT (GB)
(72) Inventor: Hackett, Jeremy Giles, Derby, DE73 1PT (GB)
(74) Representative: Parnham, Kevin

(57) **Abstract**

A bearing assembly for a gas turbine engine, the assembly 10, 210 including a two part housing 40, 42, 212 which defines a box section. Spring means 72 are provided located radially outwards relative to a bearing 18, with the spring means 72 extending within the box section from the front of an outer bearing race 22 to an inner housing part 40.

## Description

This invention concerns bearing assemblies for a gas turbine engine, and also a gas turbine engine incorporating one or more such assemblies.

As the speed of rotation in gas turbine engines as used for example in jet aircraft has increased, it has often been found appropriate to include spring arrangements in bearing assemblies. One such arrangement is to provide a plurality of spring bars spaced circumferentially around the engine. The spring bars are typically strips of steel extending rearwardly between a bearing outer race and a bearing housing. Such strips can add to the length of the bearing assembly and hence engine. An increase in engine length can have a significant effect on the engine weight.

Such bearing assemblies generally include a housing with a plurality of circumferential spaced webs extending between an inner part which engages with the outer circumference of the outer race, and an outer part mountable to an intercase or other fixture. This arrangement can lead during use as a result of thermal expansion, to a non circular profile being imparted to the part of the housing which engages with the outer race. This is due to the parts of the housing between the webs bowing outwardly. This can lead to undesirable vibrations in use, and/or wear to the inner part of the housing.

Such bearing assemblies may be provided for instance at the upstream end of the high pressure compressor, engageable between an intercase and the main engine shaft. Such a bearing is generally referred to as the HP location bearing.

According to the present invention there is provided a bearing assembly for a gas turbine engine, the assembly including a bearing with inner and outer bearing races, a bearing housing, the housing being mountable to an intercase or other fixture, the bearing housing being engageable against the outer bearing race, and spring means engageable between the bearing housing and the outer bearing race; the spring means being located radially outwards relative to the bearing.

The bearing housing preferably includes inner and outer parts, with the inner part engageable against the outer bearing race, and with the spring means engageable between the outer bearing race and the inner part.

Damping means is preferably provided between the bearing housing inner part and the outer bearing race, and the damping means may include pressurised fluid, which may be oil trapped between the outer bearing race and the bearing housing inner part.

The spring means preferably extends rearwardly from the outer bearing race to the inner housing part. The spring means preferably extends from the front of the outer bearing race to the inner housing part.

The spring means may include a plurality of circumferentially spaced spring members, which spring members may comprise strips of material, which material may be steel. The spring means may include an annular front part engageable against the front of the outer bearing race, and an annular rear part engageable against the housing inner part, with the spring members extending between the front and rear parts of the spring means.

The bearing housing outer part may be integral with the intercase of a gas turbine engine.

Preferably part of the bearing housing has a substantially box section, which box section is preferably formed by both the inner and outer parts. The spring means preferably extends across the box section.

The invention also provides a bearing assembly including a bearing with inner and outer bearing races, a bearing housing, the housing being engageable against the outer bearing race, part of the bearing housing having a substantially box section, with part of the box section being engageable against the outer bearing race.

The bearing housing may include inner and outer parts which together form the box section.

An embodiment of the present invention will now be described by way of example only and with reference to the accompanying drawings, in which:-
Fig. 1 is a cross sectional diagrammatic view of a first bearing assembly according to the invention mounted in the gas turbine engine of a jet aircraft;
Figs. 2 to 5 are diagrammatic sectional views showing sequential assembly of the assembly of Fig.1 moving to a fully assembled arrangement in Fig. 5;
Fig. 6 is a cross sectional diagrammatic view of part of the assembly of Fig. 1;
Fig. 7 is a diagrammatic view along the line AA of Fig. 6;
Figs. 8 to 10 are diagrammatic sectional views respectively of three different parts of the assembly of Fig. 1;
Fig. 11 is a diagrammatic exploded view from the front and side of the assembly of Fig. 1;
Fig. 12 is a diagrammatic exploded view from the rear and side of the assembly of Fig. 1;
Fig. 13 is a cross sectional diagrammatic view of a second bearing assembly according to the invention mounted in the gas turbine engine of a jet aircraft;
Fig. 14 is a cross sectional diagrammatic view of a third bearing assembly according to the invention; and,
Fig. 15 is a cross sectional diagrammatic view of an alternative bearing assembly according to the present invention.

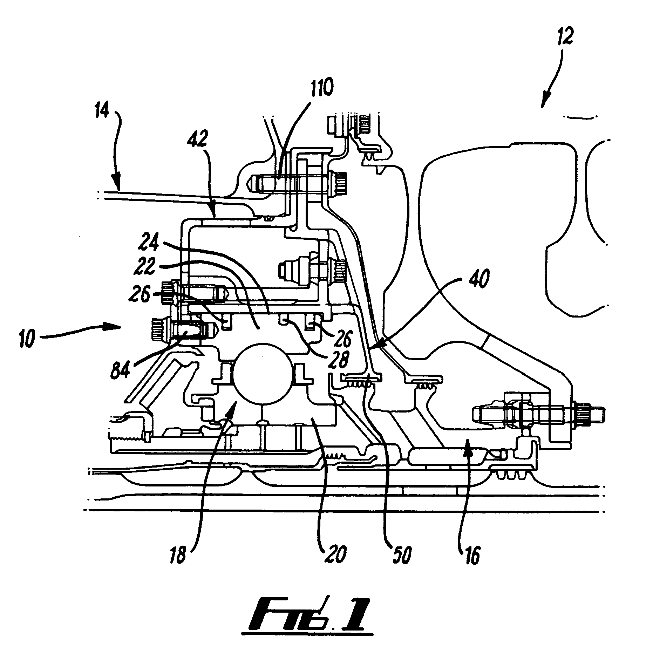

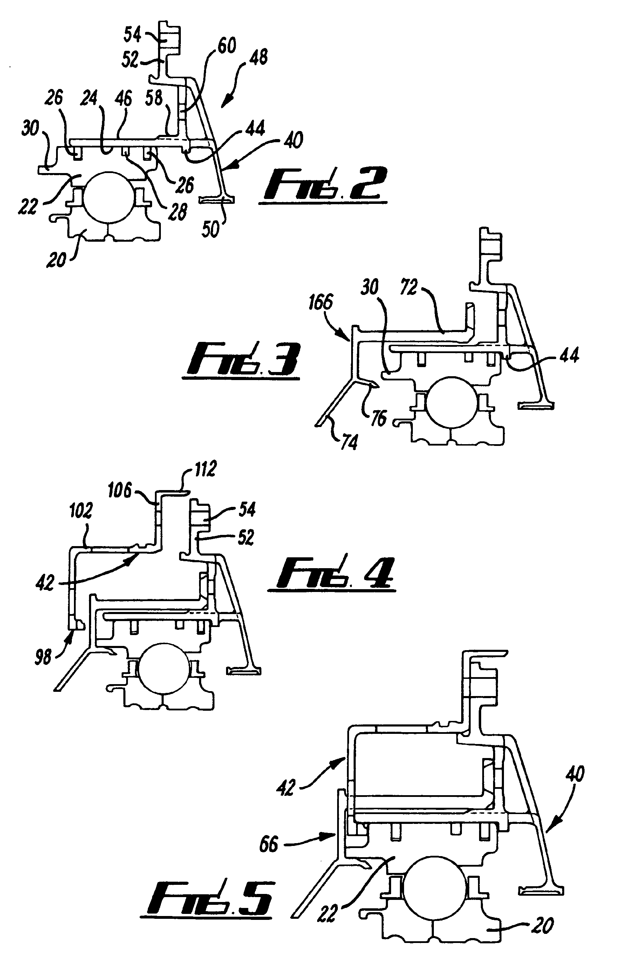

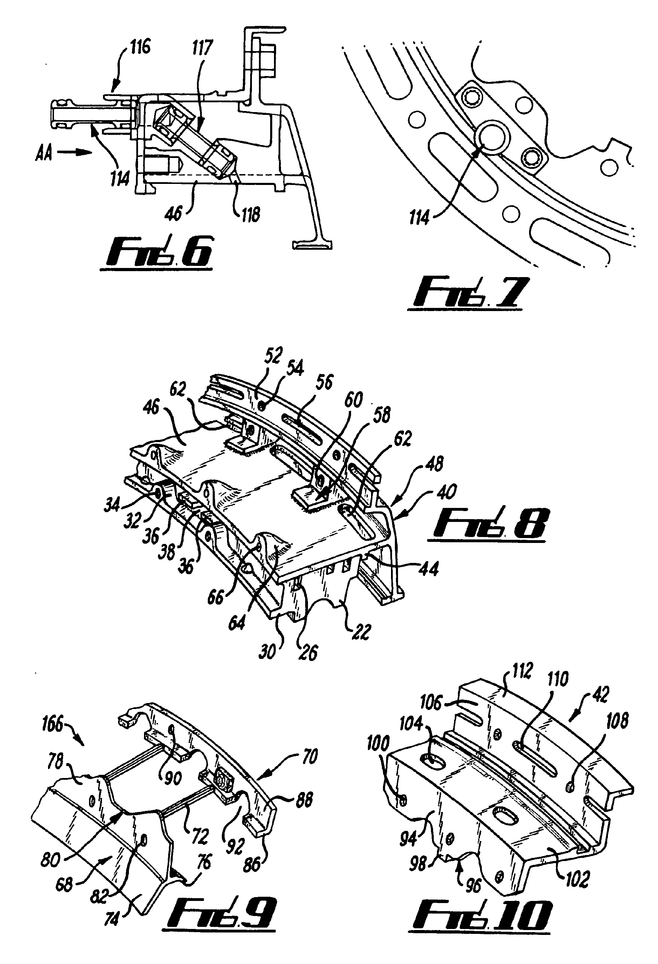

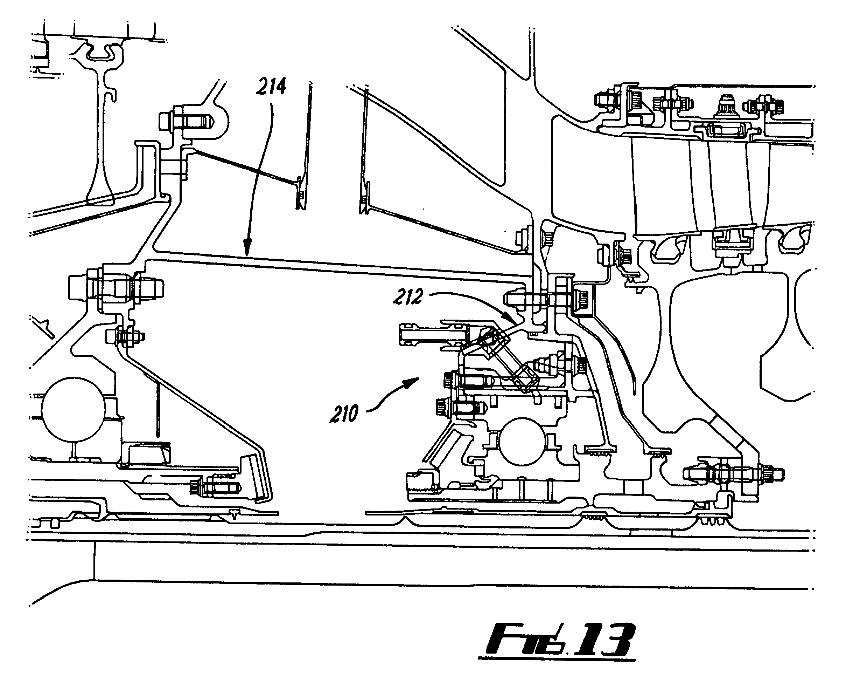

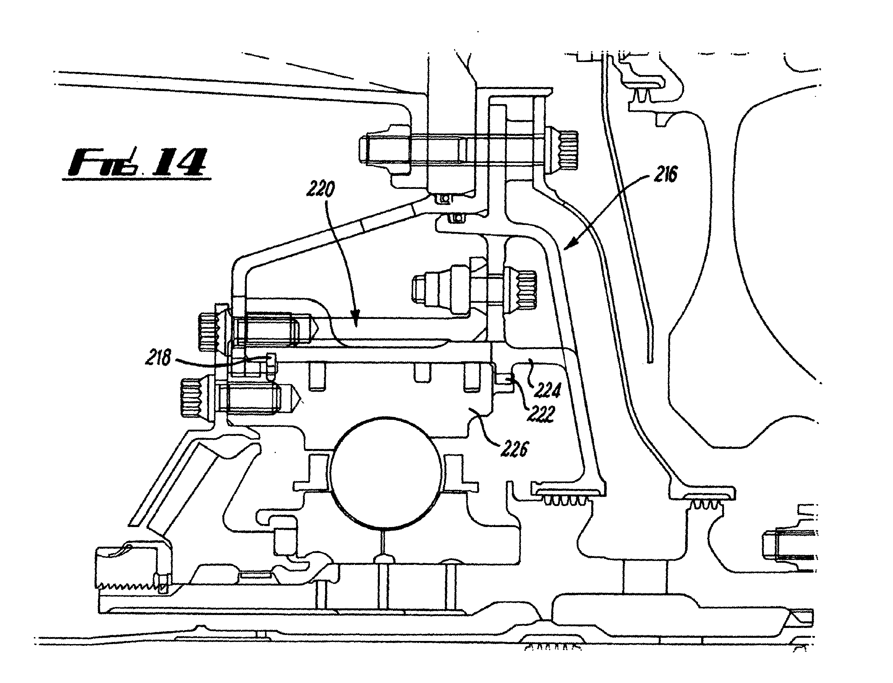

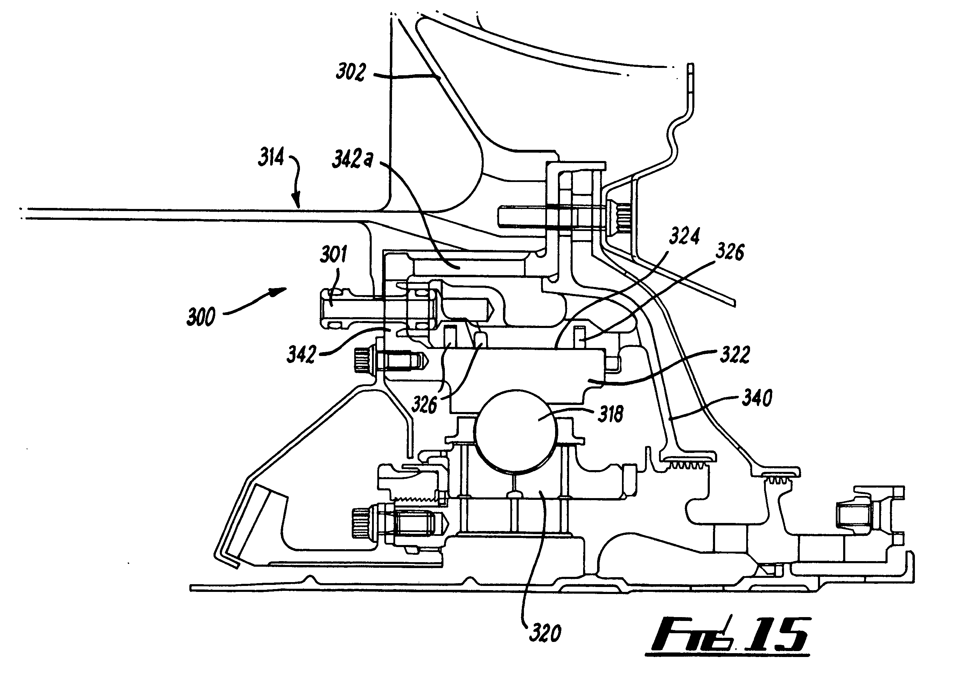

Figs. 1 to 12 of the drawings show a first HP location bearing assembly 10 in an aircraft gas turbine engine, engageable between the high pressure compressor 12 via the intercase 14, and the HP compressor stub shaft 16 of the gas turbine engine. The assembly 10 comprises a bearing 18 in the form of a ball bearing brace with an inner race 20 connected to the shaft 16 and an outer race 22.

The outer face 24 of the outer race 22 is provided with two spaced circumferential slots 26 towards the perimeter thereof, and each slot 26 in use locates a respective sealing ring. A further slot 28 is provided in the outer face 24 of the outer race towards the rearmost of the slots 26.

A mounting lip 30 is provided on the front edge of the outer race 22, part way between the inner and outer edges thereof. On the front face of the outer race 22 a plurality of spaced bosses 32 with mounting holes 34 are provided. Five pairs of forward facing projections 36 are also provided which define a space 38 therebetween.

The assembly 10 also includes a housing with inner and outer parts 40, 42. The outer race 22 is engageable against the innerside of the inner housing 40 and extends to close against a radially inwardly extending rim 44 on the innerside of the inner housing part 40, with a small amount of built in clearance therebetween to restrict the rearward movement of the bearing 18 during load reversal. The inner housing part 40 comprises a main annular platform 46 which mounts a rear rim 48 which extends inwardly and outwardly from the platform 46. At the inner end of the rim 48 a circumferential flange 50 is provided which forms a labyrinth seal with the shaft 16. The rim 48 outwardly beyond the platform extends outwardly and forwardly to define an outwardly extending flange 52 with a plurality of spaced mounting holes 54 for mounting the inner housing to the intercase 14. A plurality of slots 56 are provided between the mounting holes 54 for airflow purposes.

Inwardly from the mounting holes 54 on the platform 46 are provided spigots 58 with further mounting holes 60 behind. On the platform 46 at the rearward end thereof, between the spigots 58, recesses 62 are provided for oil salvaging. On the front edge of the platform 46, a plurality of spaced bosses 64 with mounting holes 66 are provided, the bosses 64 being intermediate the spigots 58.

A spring bar assembly 166 is provided which includes a forward ring 68, a rearward ring 70 and a plurality of spaced spring members 72 extending therebetween. In this instance twenty spring members 72 are provided around the engine.

The forward ring 68 includes a forward and inward facing flange 74, and also a rearward facing flange 76, which locates beneath the mounting lip 30. The forward ring 68 also includes a radial part 78 which has a shaped outer edge defining valleys 80 to permit access to the bosses 64 on the platform 46. A plurality of mounting holes 82 are provided in the radial part 78 to permit mounting onto the front of the outer race 22 as shown in Fig. 1 by bolts 84.

The rearward ring 70 has an inner flange 86 locatable on the spigots 58 and a section 88 extending radially outwardly. A plurality of mounting holes 90 are provided in the flange 86 to receive bolts to mount the spring bar assembly 166 to the inner bearing housing 40 via the holes 90. A plurality of cut outs 92 are provided in the section 88 intermediate the mounting holes 90 to enable the spring means 166 to be moved across the platform 46, with the location of the cut outs 92 corresponding to the location of the bosses 64 on the platform 46. The spring members 72 are in the form of strips of steel which extend between the forward radial section 78 and the forward facing flange 86.

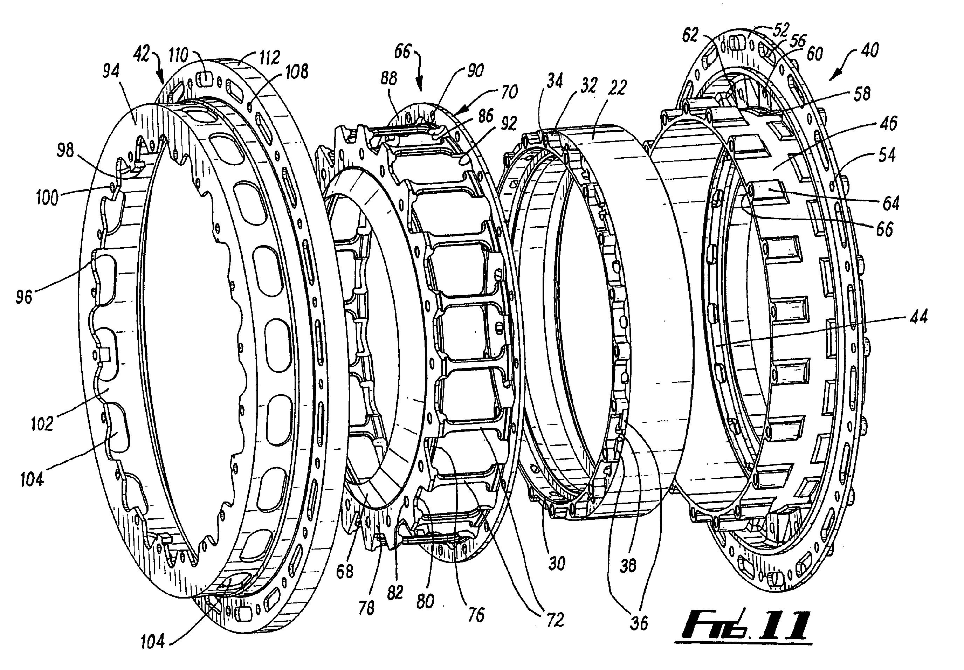

Figs. 4 and 10 show the outer housing 42 which locates on the inner housing 40 to define a box section as shown, which locates the spring members 72. The outer housing 42 includes a radial inwardly extending section 94 with a scalloped lower edge 96 shaped such that it can slide past the correspondingly shaped outer edge of the radial part 78 on the spring bar assembly 66. Five rearwardly facing projections 98 are provided spaced around the outer housing 42, and locatable in the respective spaces 38 to prevent relative rotation between the outer housing and the bearing outer race 42, 22 and provide a safety mechanism in the event of failure of the spring bar assembly 66.

A plurality of mounting holes 100 are provided in the section 94 to enable the outer housing 42 to be mounted to the bosses 64 on the platform 46. Extending rearwardly from the top of the section 94 is a further section 102 which defines the outside of the box section, and a plurality of spaced openings 104 are provided therein for oil scavenging. An outwardly radially extending mounting flange 106 is provided with mounting holes 108 and intermediate slots 110, to permit mounting to the corresponding holes 54 in the inner housing 40 and to the intercase 14, by bolts 110. A rearwardly facing rim 112 is provided at the radial outer end of the flange 106.

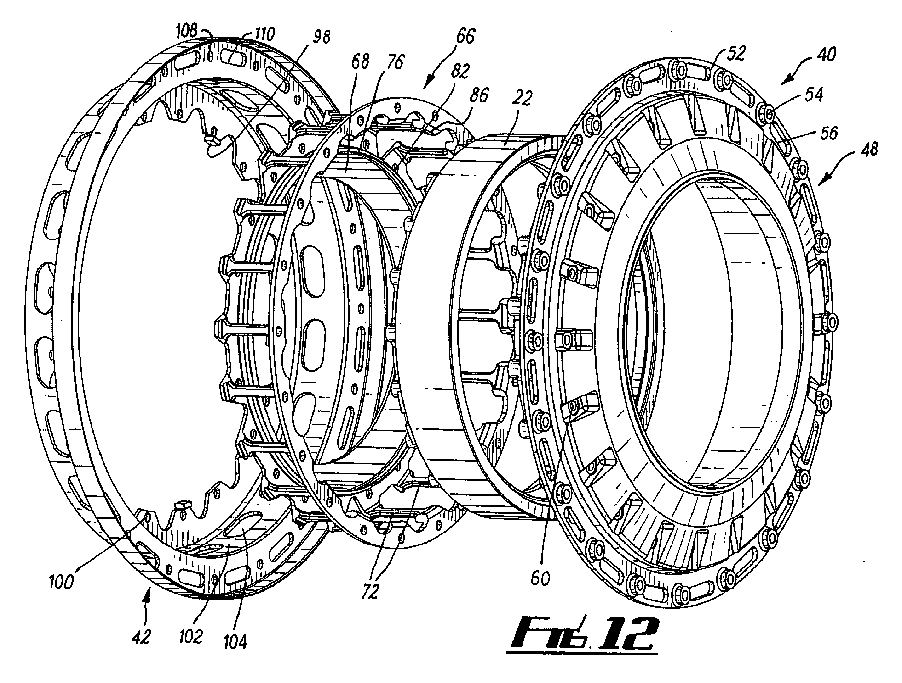

Fig. 5 shows the above described components fitted together save for the respective mounting bolts.

Figs. 6 and 7 show a damping arrangement for providing oil under pressure to locate between the sealing rings in the slots 26, and between the outer race 22 and the innerside 24 of the platform 46. The damping arrangement comprises a transfer tube 114 leading to an adapter 116 which leads via a second transfer tube 117 and a bore 118 in the platform 46 to the above described space. Only one damping arrangement is provided around the assembly 10.

In use, the components are assembled as described. The spring members 72 act as springs with forces being directed from the front of the outer race 22 through the forward ring 68 and rearwardly through the spring members 72. The spring members 72 are thus under tension in use, which is generally a preferred arrangement. The oil located between the outer race 22 and the innerside 24 of the platform 46 provides for damping.

There is thus described a bearing assembly providing a spring action and also damping. The bearing outer race 22 is loaded forwards by gas load, and hence the spring members 72 are in tension, which is advantageous. The spring members do not extend rearwardly from the bearing, and in this instance they are provided radially outwardly with appropriate connection arrangements thereto. Accordingly, the bearing assembly can be shorter than previous arrangements, thus permitting a shorter engine length and/or smaller compressor diameter as may be required.

This arrangement permits if necessary longer spring members to be used which can be advantageous in some conditions. If required, it may be possible for the spring members to extend further forwards, to accommodate extra length therein

The box section provided by the inner and outer housings encourages even circumferential thermal expansion wholly around the bearing, thereby reducing the possibility of scuffing or wear.

Fig. 13 shows a second HP location bearing assembly 210 in an aircraft gas turbine engine. The assembly 210 is similar to the assembly 10 and is not therefore further described, except that the outer bearing housing 212 is integral with the intercase 214.

Fig. 14 shows an alternative safety mechanism and anti rotation arrangement in a bearing assembly 216. A circlip arrangement 218 is provided on the underside of the spring bar assembly 220 to catch the bearing if the spring bars fail. An anti rotation dog 222 is provided on the rear of the inner housing 224 engageably in corresponding slots at the rear of the outer bearing race 226, in a similar manner to the anti rotation arrangement provided at the front of the first assembly 10.

Referring to Fig. 15 providing a cross sectional diagrammatic view of an alternative bearing assembly 300 in accordance with the present invention. Thus, as previously an inner casing 314 is engaged by a bearing assembly comprising a roller bearing 318 with inner and outer races 320, 322. Thus, the assembly 300 is similar to that described previously with respect to Figs. 1 to 14. However, it will be noted that in comparison with these earlier bearing assemblies in accordance with the present invention, the outer race 22 is formed integrally with the outer housing 342 in comparison with the arrangement described previously. In such circumstances the outer housing 342 in the section 342a forms spring members to provide the necessary bias to retain bearing assembly 300 operation. An inner housing 340 presents an inner face 324 which includes circumferential slots 326 for sealing rings. The combination of outer race 322 and outer housing 342 is secured to the inner casing 340 through a bolt arrangement 301. In such circumstances in comparison with the assemblies described previously, it will be appreciated that a radial flange 302 of the inter casing 314 can be provided at a more forward location conveniently in order that the angle of this radial flange 302 can be steeper.

It will be noted that the spring members formed in the section 342a are again positioned or located radially outward of the bearing 318 in order that the longitudinal length of the assembly is not extended.

Formation of an integral outer bearing race 322 with spring member section 342a can be achieved by appropriate casting and subsequent machining. It will be appreciated that the box structure formed between the outer bearing race 322 and the spring member section 342a may be entered by an appropriate forming tool in order to create the necessary dimensional surfaces for engagement by sealing rings secured in slots 326 as well as to enable the spring members to be formed in the section 342a. Generally, the integral section comprising the outer race 322 and the outer housing 342 including the spring member section 342a may be formed in segments to provide the whole circumference about the bearing assembly. However, where possible or feasible, this combination of outer bearing race 322 and outer housing 342 will comprise a complete circumferential collar about the bearing assembly.

It is to be realised that various other modifications may be made without departing from the scope of the invention. For instance, whilst the above described example includes the spring members being located radially outwardly, and also the box section configuration, in some instances only one of these features may be required. The spring members could take a different form. Whilst an HP location bearing is described, this invention is usable in bearings at other locations, or in different applications.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A bearing assembly for a gas turbine engine, the assembly (10, 210) including a bearing (18, 318) with inner and outer bearing races (20, 22, 320, 322), a bearing housing (40, 42, 212), the housing (40, 42, 212) being mountable to an intercase (14) or other fixture, the bearing housing (40, 42, 212) being engageable against the outer bearing race (22), and spring means (72, 342a) engageable between the bearing housing (40, 42, 212) and the outer bearing race (22, 322); **characterised in that** the spring means is located radially outwards relative to the bearing (18).

2. An assembly according to claim 1, **characterised in that** the bearing housing includes inner and outer parts (40, 42, 212; 340, 342), with the inner part (40, 340) engageable against the outer bearing race (22, 322), and with the spring means (72, 342a) engageable between the outer bearing race (22, 322) and the inner part (40, 340).

3. An assembly according to claim 2, **characterised in that** damping means is provided between the bearing housing inner part (40, 340) and the outer bearing race (22, 322), and the damping means may include pressurised fluid, which may be oil trapped between the outer bearing race (22, 322) and the bearing housing inner part (40, 340).

4. An assembly according to claims 2 or 3, **characterised in that** the spring means (72, 342a) extends rearwardly from the outer bearing race (22, 322) to the inner housing part (40, 340).

5. An assembly according to claim 4, **characterised in that** the spring means (72, 342a) extends from the front of the outer bearing race (22, 322) to the inner housing part (40, 340).

6. An assembly according to any of the preceding claims, **characterised in that** the spring means includes a plurality of circumferentially spaced spring members (72, 342a).

7. An assembly according to claim 6, **characterised in that** the spring members comprise strips (72, 342a) of material, which material may be steel.

8. An assembly as claimed in any preceding claim wherein the outer bearing race 322 is integral with the outer housing part 342 with the spring members 342a formed to extend between a front flange of the outer housing part 342 to a bearing housing 340.

9. An assembly according to claims 6 or 7 when dependent on any of claims 2 to 5, **characterised in that** the spring means may include an annular front part (68) engageable against the front of the outer bearing race (22), and an annular rear part (70) engageable against the housing inner part (40), with the spring members (72) extending between the front and rear parts (68, 70) of the spring means.

10. An assembly according to claim 2 or any of claims 3 to 8 when dependent on claim 2, **characterised in that** the bearing housing outer part (212) is integral with the intercase (214) of a gas turbine engine.

11. An assembly according to any of the preceding claims, **characterised in that** part of the bearing housing (40, 42, 212, 340) has a substantially box section.

12. An assembly according to claim 11 when dependent on claim 2, **characterised in that** the box section is formed by both the inner and outer parts (40,42, 212).

13. An assembly according to claims 11 or 12, **characterised in that** the spring means (72) extends across the box section.

14. A bearing assembly including a bearing with inner and outer bearing races (20, 22, 322), a bearing housing (40, 42, 212, 340), the housing (40, 42, 212, 340) being engageable against the outer bearing race (22, 322), **characterised in that** part of the bearing housing (40, 42, 212, 340) has a substantially box section, with part of the box section being engageable against the outer bearing race (22, 322).

15. An assembly according to claim 14, **characterised in that** the bearing housing includes inner and outer parts (40, 42) which together form the box section.

16. A bearing assembly substantially as hereinbefore described with reference to the accompanying drawings.

17. Any novel subject matter or combination including novel subject matter disclosed herein, whether or not within the scope of or relating to the same invention as any of the preceding claims.
